(19) Europäisches Patentamt
European Patent Office
Office européen des brevets

(11) EP 0 542 080 B1

(12) **EUROPÄISCHE PATENTSCHRIFT**

(45) Veröffentlichungstag und Bekanntmachung des Hinweises auf die Patenterteilung: **06.03.1996 Patentblatt 1996/10**

(51) Int. Cl.$^6$: **A01N 25/34**

(21) Anmeldenummer: **92118737.3**

(22) Anmeldetag: **02.11.1992**

(54) **Wirkstoffhaltige Formkörper auf Basis thermoplastisch verarbeitbarer elastomerer Polyether-Blockamide, Verfahren zu ihrer Herstellung und Verwendung zur Kontrolle von Schädlingen**

Active ingredient containing shaped bodies of thermoplastic elastomeric polyether-blockamides, process for their preparation and their use for pest control

Corps moulés contenant une substance active, à base de polyéther-blocamides élastomères thermoplastiques, procédé de leur préparation et leur utilisation pour lutter contre les organismes indésirables

(84) Benannte Vertragsstaaten:
**AT BE CH DE DK ES FR GB GR IE IT LI LU NL PT SE**

(30) Priorität: **13.11.1991 DE 4137273**

(43) Veröffentlichungstag der Anmeldung:
**19.05.1993 Patentblatt 1993/20**

(73) Patentinhaber: **BAYER AG**
**D-51368 Leverkusen (DE)**

(72) Erfinder:
- **Brandt, Heinz-Dieter, Dr.**
  **W-4150 Krefeld (DE)**
- **Dhein, Rolf, Dr.**
  **W-4150 Krefeld (DE)**
- **Hugl, Herbert, Dr.**
  **W-5060 Bergisch Gladbach 2 (DE)**
- **Hackemüller, Doris, Dr.**
  **W-4000 Düsseldorf 1 (DE)**
- **Stendel, Wilhelm, Dr.**
  **W-5600 Wuppertal 1 (DE)**

(56) Entgegenhaltungen:
**EP-A- 0 338 821** **DE-A- 3 611 137**

Bemerkungen:
Die Akte enthält technische Angaben, die nach dem Eingang der Anmeldung eingereicht wurden und die nicht in dieser Patentschrift enthalten sind.

EP 0 542 080 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Rank Xerox (UK) Business Services
2.9.12/3.4

## Beschreibung

Die vorliegende Erfindung betrifft neue wirkstoffhaltige Formkörper auf Basis thermoplastisch verarbeitbarer elastomerer Polyether-Blockamide, deren Herstellung und deren Verwendung zur Kontrolle von Schädlingen, insbesondere bei Nutz- und Haustieren.

Formkörper, die Wirkstoffe zur Kontrolle von Schädlingen enthalten, sind bekannt. Sie basieren auf der langsamen Freisetzung von Wirkstoffen aus einer wirkstoffhaltigen Trägermatrix von Kunststoffen (vergleiche z.B. Aries et al US P 3 814 061, Greenberg US-P 3 918 407, Miller und Morales US-P 3 944 662, Millionis und Spicer US-P 4 041 151, Pasarela US-P 4 145 409, Greenberg und Cloud US-P 4 158 051, v. Bittera et al US-P 4 225 578. McDaniel und Pruitt EP-OS 0 052 411 B1, Grubb et al US-P 3 852 416 und Pearce US-P 4 536 388.

Der bei bekannten Formkörpern praktisch fast ausschließlich eingesetzte Träger ist PVC Andere Träger werden in der Literatur zwar erwähnt, haben aber bis jetzt keinen Eingang in die Praxis gefunden. So wird in US-P 4 195 075 unter anderem erwähnt, daß als Trägerpolymere für Ohrmarken auch thermoplastische Elastomere in Frage kommen. Auch in diesem Zitat werden jedoch ausschließlich Beispiele mit weichmacherhaltigem PVC als Trägerpolymer beschrieben.

Dies ist auch nicht erstaunlich. PVC ist preiswert und leicht zugänglich. Es ist auch in breiten Bereichen mit anderen Stoffen, insbesondere Weichmachern, mischbar. Diese Weichmacher haben bei wirkstoffhaltigen PVC-Körpern die Funktion den Wirkstoff im Träger gelöst zu halten und ihn langsam an die Körperoberfläche zu transportieren. Dort verdampft der Wirkstoff oder er wird zusammen mit dem Weichmacher von der Oberfläche abgerieben. Das Zusammenwirken der drei Komponenten PVC-Träger, Weichmacher und Wirkstoff bestimmt ob und wieweit der Formkörper praktisch einsetzbar ist.

Wird eine Komponente des Gesamtsystems geändert, läßt sich nicht mehr vorhersehen, ob das System in der Praxis noch wirkt. Dies trifft besonders zu, falls der Weichmacher, dem ja beim Wirkstofftransport eine Schlüsselfunktion zukommt, geändert oder weggelassen wird.

Aus verschiedenen Gründen ist es wünschenswert PVC als Trägermaterial zu ersetzen. Auch ist es vorteilhaft auf den Einsatz von Weichmachern teilweise oder ganz zu verzichten. Es galt daher ein Wirkstoff-Formkörper-System zu finden bei dem auf PVC als Trägermaterial sowie auf Weichmacher verzichtet werden kann und das dennoch in der Praxis gut wirksam ist.

Thermoplastische Elastomere sind Werkstoffe, die elastomere Phasen in thermoplastisch verarbeitbaren Polymeren entweder physikalisch eingemischt oder chemisch eingebunden enthalten. Man unterscheidet Polyblends in denen die elastomeren Phasen physikalisch eingemischt vorliegen und Block-Copolymere in denen die elastomeren Phasen Bestandteil des polymeren Gerüsts sind. Durch den Aufbau der thermoplastischen Elastomere liegen harte und weiche Bereiche nebeneinander vor. Die harten Bereiche bilden dabei eine kristalline Netzstruktur oder eine kontinuierliche Phase deren Zwischenräume von elastomeren Segmenten ausgefüllt sind. Aufgrund dieses Aufbaus haben diese Werkstoffe kautschukähnliche Eigenschaften.

Man kann 5 Hauptgruppen der thermoplastischen Elastomere unterscheiden:

1. Copolyester
2. Polyether-Block-Amide (PEBA)
3. Thermoplastische Polyurethane (TPU)
4. Thermoplastische Polyolefine (TPO)
5. Styrol-Block Copolymere

Diese 5 Hauptgruppen zeigen bei chemisch völlig unterschiedlichem Aufbau gleichartige makroskopisch physikalische Eigenschaften. Trotz dieser makroskopisch gleichartigen Eigenschaften verhalten sich diese Hauptgruppen bei der Einmischung und Freisetzung von Wirkstoffen völlig unterschiedlich.

Die Verwendung bestimmter thermoplastischer Elastomere als Träger für Wirkstoffe ist bekannt z.B. aus EP-OS 338 821. Aus DE-OS 3 611 137 ist bekannt, daß flüchtige insektizide Wirkstoffe wie DDVP aus thermoplastischen Polyamiden freigesetzt werden.

Gegenstand der Erfindung sind

1. Wirkstoffhaltige Formkörper, die als Träger thermoplastische Elastomere auf Basis von Polyether-Blockamiden und mindestens einen Wirkstoff aus der Reihe Propoxur, Cyfluthrin, Flumethrin oder Pyriproxifen gegenbenenfalls neben üblichen Zusätzen enthalten.

2. Verfahren zur Herstellung wirkstoffhaltiger Formkörper, indem man thermoplastische Elastomere auf Basis von Polyether-Blockamiden mit mindestens einem Wirkstoff aus der Reihe Propoxur, Cyfluthrin, Flumethrin oder Pyriproxifen und gegebenenfalls üblichen Zusätzen mischt und in üblicher Weise verarbeitet.

Wirkstoffhaltige Formkörper auf Basis thermoplastischer Elastomere des Typs Polyether-Blockamid sind aus DE-OS 3 611 137 bekannt. Bei diesen Formkörpern wurden Wirkstoffe mit hohem Dampfdruck, wie z.B. DDVP, eingesetzt. Es konnte nicht erwartet werden, daß Wirkstoffe mit niedrigem Dampfdruck ohne Zusatz von Weichmachern aus der Polymermatrix an die Polymeroberfläche gelangen. Außerdem werden in DE-OS 3 611 137 nur ganz spezielle Polyether-Blockamide entsprechend der folgenden Formel

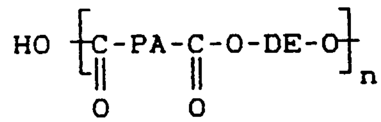

in welcher

PA den Polyamidteil und

DE den Polyetherteil bedeuten und

n für eine ganze Zahl steht, die die Anzahl der wiederkehrenden Einheit bezeichnet.

Diese Polyether-Blockamide haben einen speziellen Blockaufbau, der aus dem Verfahren zur Herstellung von Polymeren dieses speziellen Typs resultiert. Dieses spezielle Verfahren zur Herstellung der speziellen PolyetherBlockamide wird im Anspruch 3 der DE-OS 3 611 137 eingehend beschrieben und führt zu Polyether-Blockamid mit OH-Endgruppen.

Es war überraschend, daß auch anders strukturierte Polyether-Blockamide nicht flüchtige Wirkstoffe ohne Zusatz von Weichmachern aus der Polymermatrix an die Polymeroberfläche migrieren lassen, da das Ändern einer einzigen Komponente des Gesamtsystems unübersehbare Auswirkungen hat.

Erfindungsgemäß geeignete Polyether-Blockamide sind beispielsweise solche, die aus Polymerketten bestehen, die aus wiederkehrenden Einheiten entsprechend der Formel I aufgebaut sind.

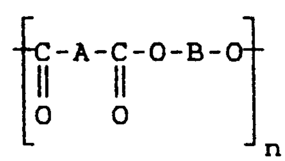

Formel I

in welcher
A die von einem Polyamid mit 2 Carboxylendgruppen durch Verlust der letzteren abgeleitete Polyamidkette ist und
B die von einem Polyoxyalkylenglycol mit endständigen OH-Gruppen durch Verlust der letzteren abgeleitete Polyoxyalkylenglycolkette ist und
n die Zahl der die Polymerkette bildenden Einheiten ist. Als Endgruppen stehen dabei bevorzugt OH-Gruppen oder Reste von Verbindungen die die Polymerisation abbrechen.

Die Dicarbonsäurepolyamide mit den endständigen Carboxylgruppen werden auf bekannte Weise erhalten, so z.B. durch Polykondensation eines oder mehrerer Lactame oder/und einer oder mehrerer Aminosäure, ferner durch Polykondensation einer Dicarbonsäure mit einem Diamin, jeweils in Gegenwart eines Überschusses einer organischen Dicarbonsäure, vorzugsweise mit endständigen Carboxylgruppen. Diese Carbonsäuren werden während der Polykondensation Bestandteil der Polyamidkette und lagern sich insbesondere an den Ende derselben an, wodurch man ein α-ω-dicarbonsaures Polyamid erhält. Ferner wirkt die Dicarbonsäure als Kettenabbruchmittel, weshalb sie auch im Überschuß eingesetzt wird.

Das Polyamid kann erhalten werden, ausgehend von Lactamen und/oder Aminosäuren mit einer Kohlenwasserstoffkette bestehend aus 4-14 C-Atomen, wie z.B. von Caprolactam, Oenantholactam, Dodekalactam, Undekanolactam, Dekanolactam, 11-Amino-undekano oder 12-Aminododekansäure.

Als Beispiele für Polyamide, wie sie durch Polykondensation einer Dicarbonsäure mit einem Diamin entstehen, können genannt werden die Kondensationsprodukte aus Hexamethylendiamin mit Adipin-, Azelain-, Sebacin-, und 1,12-Dodecandisäure, sowie die Kondensationsprodukte aus Nonamethylendiamin und Adipinsäure.

Bei den zur Synthese des Polyamids, das heißt, einerseits zur Fixierung jeweils einer Carboxylgruppe an jedem Ende der Polyamidkette und andererseits als Kettenabbruchmittel verwendeten Dicarbonsäure kommen solche mit 4-20 C-Atomen in Frage, insbesondere Alkandisäuren, wie Bernstein-, Adipin-, Kork-, Azelain-, Sebacin-, Undekandi- oder Dodekandisäure, ferner cycloaliphatische oder aromatische Dicarbonsäure, wie Terephthal- oder Isphthal- oder Cyclohexan-1,4-dicarbonsäure.

Die endständigen OH-Gruppen aufweisenden Polyoxyalkylenglycole sind unverzweigt oder verzweigt und weisen einen Alkylenrest mit mindestens 2 C-Atomen auf. Insbesondere sind dies Polyoxyethylen-, Polyoxypropylen- und Polyoxytetramethylenglycol, sowie Copolymerisate davon.

Das Durchschnittsmolekulargewicht dieser OH-Gruppen-terminierten Polyoxyalkylenglycole kann sich in einem großen Bereich bewegen, vorteilhaft liegt es zwischen 100 und 6000, insbesondere zwischen 200 und 3000.

Der Gewichtsanteil des Polyoxyalkylenglycols, bezogen auf das Gesamtgewicht des zur Herstellung des PEBA-Polymeren verwendeten Polyoxyalkylenglycols und Dicarbonsäurepolyamids beträgt 5-85 % vorzugsweise 10-50 %.

Verfahren zur Synthese derartiger PEBA-Polymerer sind aus FR-PS 7 418 913 (Nr. der Veröffentlichung 2 273 021), DOS 2 802 989, DOS 2 837 687, DOS 2 523 991, EP-S 0 095 893, DOS 2 712 987 beziehungsweise DOS 2 716 004 bekannt.

Erfindungsgemäß bevorzugt geeignet sind solche PEBA-Polymere, die im Gegensatz zu den vorher beschriebenen, statistisch aufgebaut sind. Zur Herstellung dieser Polymere wird ein Gemisch aus

1. einer oder mehrerer polyamidbildender Verbindungen aus der Gruppe der ω-Aminocarbonsäuren beziehungsweise Lactame mit mindestens 10 Kohlenstoffatomen,

2. einem α-ω-Dihydroxy-Polyoxyalkylenglycol,

3. mindestens einer organischen Dicarbonsäure
in einem Gewichtsverhältnis von 1:(2+3) zwischen 30:70 und 98:2, wobei in (2+3) Hydroxyl- und Carbonylgruppen in äquivalenten Mengen vorliegen, in Gegenwart von 2 bis 30 Gewichtsprozent Wasser, bezogen auf die polyamidbildenden Verbindungen der Gruppe 1, unter dem sich einstellenden Eigendruck auf Temperaturen zwischen 23°C und 30°C erhitzt und anschließend nach Entfernen des Wassers unter Ausschluß von Sauerstoff bei Normaldruck oder unter vermindertem Druck bei 250 bis 280°C weiterbehandelt werden,

Solche bevorzugt geeignete PEBA-Polymere sind z.B. in DE-OS 2 712 987 beschrieben.

Geeignete und bevorzugt geeignete PEBA-Polymere sind z.B. unter den Handelsnamen PEBAX der Fa, Atochem, ®Vestamid der Fa. Hüls AG, ®Grilamid der Fa. EMS-Chemie und ®Kellaflex der Fa. DSM erhältlich.

Als Wirkstoffe für die erfindungsgemäßen Formkörper seien Wirkstoffe mit den common names Propoxur, Cyfluthrin, Flumethrin, Pyriproxifen genannt.

Die Wirkstoffe können in den Formkörpern allein oder in Mischung untereinander vorliegen.

Die Wirkstoffe liegen in den Formkörpern in Konzentrationen von 0,1 - 20 Gew.-% vor, bevorzugt zwischen 1 - 10 Gew.-%.

Die erfindungsgemäßen Formkörper können weiterhin die für Kunststoffe üblichen Additive enthalten. Übliche Additive sind beispielsweise Pigmente, Stabilisatoren, Fließmittel, Gleitmittel, Entformungsmittel.

Beispiele für übliche Additive sind;

1. <u>Antioxidantien</u>

1.1 <u>Alkylierte Monophenole</u>, z.B. 2,6-Di-tert.butyl-4-methylphenol, 2-Tert.butyl-4,6-dimethylphenol, 2,6-Di-tert.butyl-4-ethylphenol, 2,6-Di-tert.butyl-4-n-butylphenol, 2,6-Di-tert.butyl-4-i-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tricyclohexylphenol, 2,6-Di-tert.butyl-4-methoxymethylphenol.

1.2 <u>Alkylierte Hydrochinone</u>, z.B. 2,6-Di-tert.butyl-4-methoxyphenol, 2,5-Di-tert.butyl-hydrochinon, 2,5-Di-tert.amyl-hydrochinon, 2,6-Diphenyl-4-octadecyloxyphenyl.

1.3 <u>Hydroxylierte Thiodiphenylether</u>, z.B. 2,2'-Thio-bis-(6-tert.butyl-4-methylphenol), 2,2'-Thio-bis-(4-octylphenol), 4,4'-Thio-bis-(6-tert.butyl-3-methylphenol), 4,4'-Thio-bis-(6-tert.butyl-2-methylphenol).

1.4 <u>Alkyliden-Bisphenole</u>, z.B. 2,2'-Methylen-bis-(6-tert.butyl-4-methylphenol), 2,2'-Methylen-bis-(6-tert.butyl-4-ethylphenol), 2,2'-Methylen-bis-(4-methyl-6(α-methylcyclohexyl)-phenol), 2,2'-Methylen-bis-(4-methyl-6-cyclohexylphenol), 2,2'-Methylen-bis-(6-nonyl-4-methylphenol), 2,2'-Methylen-bis-(4,6-di-tert.butylphenol), 2,2'-Ethylidenbis-(4,6-di-tert.butylphenol), 2,2'-Ethyliden-bis-(6-tert.butyl-4-isobutylphenol), 2,2'-Methylen-bis-[6-(α-methylbenzyl)-4-nonylphenol], 2,2'-Methylen-bis-[6-(α,α-dimethylbenzyl)-4-nonylphenol], 4,4'-Methylen-bis-(2,6-di-tert.butylphenol), 4,4'-Methylen-bis-(6-tert.butyl-2-methylphenol), 1,1-Bis-(5-tert.butyl-4-hydroxy-2-methylphenyl)-butan, 2,6-Di-(3-tert.butyl-5-methyl-2-hydroxybenzyl)-4-methylphenol, 1,1,3-Tris-(5-tert.butyl-4-hydroxy-2-methylphenyl)-butan, 1,1-Bis-(5-tert.butyl-4-hydroxy-2-methylphenyl)-3-n-dodecylmercaptobutan, Ethylenglycol-bis-[3,3-bis-(3'-tert.butyl-4'-hydroxyphenyl)-butyrat], Di-(3-tert.butyl-4-hydroxy-5-methylphenyl)-dicyclopentadien, Di-[2-(3'-tert.butyl-2'-hydroxy-5'-methylbenzyl)-6-tert.butyl-4-methylphenyl]-terephthalat.

1.5 Benzylverbindungen, z.B. 1,3,5-Tri-(3,5-di-tert.butyl-4-hydroxybenzyl)-2,4,6-trimethylbenzol, Di-(3,5-di-tert.butyl-4-hydroxybenzyl)-sulfid, 3,5-Di-tert.butyl-4-hydroxybenzyl-mercaptoessigsäure-isooctylester, Bis-(4-tert.butyl-3-hydroxy-2,6-dimethylbenzyl)-dithiol-terephthalat, 1,3,5-Tris-(3,5-di-tert.butyl-4-hydroxybenzyl)-isocyanurat, 1,3,5-Tris-(4-tert.butyl-3-hydroxy-2,6-dimethylbenzyl)-isocyanurat, 3,5-Di-tert.butyl-4-hydroxybenzyl-phosphonsäure-dioctadecylester, 3,5-Di-tert.butyl-4-hydroxybenzyl-phosphonsäure-monoethylester, Calcium-Salz.

1.6 Acylaminophenole, z.B. 4-Hydroxy-laurinsäureanilid, 4-Hydroxystearinsäureanilid, 2,4-Bis-octylmercapto-6-(3,5-di-tert.butyl-4-hydroxyanilino)-s-triazin, N-(3,5-di-tert.butyl-4-hydroxyphenyl)-carbaminsäureoctylester.

1.7 Ester der β-(3,5-Di-tert.butyl-4-hydroxyphenyl)-propionsäure mit ein- oder mehrwertigen Alkoholen, wie z.B. Methanol, Octadecanol, 1,6-Hexandiol, Neopentylglycol, Thiodiethylenglycol, Diethylenglycol, Triethylenglycol, Pentaerythrit, Tris-hydroxyethylisocyanurat, Di-hydroxyethyl-oxalsäurediamid.

1.8 Ester der β-(5-tert.butyl-4-hydroxy-3-methylphenyl)-propionsäure mit ein- oder mehrwertigen Alkoholen, wie z.B. mit Methanol, Octadecanol, 1,6-Hexandiol, Neopentylglycol, Thiodiethylenglycol, Diethylenglycol, Triethylenglycol, Pentaerythrit, Tris-hydroxyethyl-isocyanurat, Di-hydroxyethyloxyalsäurediamid.

1.9 Amide der β-(3,5-Di-tert.butyl-4-hydroxyphenyl)-propionsäure, wie z.B. N,N'-Di-(3,5-di-tert.butl-4-hydroxyphenylpropionyl)-hexamethylendiamin, N,N'-(3,5-di-tert.butyl-4-hydroxyphenylpropionyl)-trimethylendiamin, N,N'-Di-(3,5-di-tert.butyl-4-hydroxyphenylpropionyl)-hydrazin.

2. UV-Absorber und Lichtschutzmittel

2.1 2-(2'-Hydroxyphenyl)-benztriazole, wie z.B. das 5'-Methyl-, 3',5'-Di-tert.butyl-, 5'-tert.butyl-, 5'-(1,1,3,3-Tetramethylbutyl)-, 5-Chlor-3',5'-ditert.butyl-, 5-Chlor-3'-tert.butyl-5'-methyl-, 3'-sec.butyl-5'-tert.butyl, 4'-Octoxy-, 3',5'-Di-tert.amyl-, 3',5'-Bis-(α,α-dimethylbenzyl)-Derivat.

2.2 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydoxy-, 2'-Hydroxy-4,4'-dimethoxy-Derivat.

2.3 Ester von gegebenenfalls substituierten Benzoesäuren, wie z.B. 4-tert.butyl-phenylsalicylat, Phenylsalicylat, Octylphenylsalicylat, Dibenzoylresorcin, Bis-(4-tert.butylbenzoyl)-resorcin, Benzoylresorcin, 3,5-Di-tert.butyl-4-hydroxybenzoesäure-2,4-di-tert.butylphenylester, 3,5-Di-tert.butyl-4-hydroxy-benzoesäure-hexadecylester.

2.4 Acrylate, wie z.B. α-Cyan-β,β-diphenylacrylsäureethylester beziehungsweise -isooctylester, α-Carbomethoxy-zimtsäuremethylester, α-Cyano-β-methyl-p-methoxy-zimtsäuremethylester beziehungsweise -butylester, α-Carbomethoxy-p-methoxy-zimtsäuremethylester, N-(β-Carbomethoxy-β-cyanovinyl)-2-methyl-indolin.

2.5 Nickelverbindungen, wie z.B. Nickelkomplexe des 2,2'-Thio-bis-[4-(1,1,3,3-tetramethylbutyl)-phenols], wie der 1:1- oder 1:2-Komplex, gegebenenfalls mit zusätzlichen Liganden, wie n-Butylamin, Triethanolamin oder N-Cyclohexyl-diethanolamin, Nickeldibutyl-dithiocarbamat, Nickelsalze von 4-Hydroxy-3,5-di-tert.butylbenzyl-phosphonsäuremonoalkylestern, wie vom Methyl- oder Ethylester, Nickelkomplexe von Ketoximen, wie von 2-Hydroxy-4-methyl-phenyl-undecylketonoxim, Nickelkomplexe des 1-Phenyl-4-lauroyl-5-hydroxypyrazols, gegebenenfalls mit zusätzlichen Liganden.

2.6 Sterisch gehinderte Amine, wie z.B. Bis-(2,2,6,6-tetramethylpiperidyl)-sebacat, Bis-(1,2,2,6,6-pentamethylpiperidyl)-sebacat, n-Butyl-3,5-di-tert.butyl-4-hydroxybenzyl-malonsäure-bis-(1,2,2,6,6-pentamethylpiperidyl)-ester, Kondensationsprodukt aus 1-Hydroxyethyl-2,2,6,6-tetramethyl-4-hydroxypiperidin und Bernsteinsäure, Kondensationsprodukt aus N,N'-(2,2,6,6-Tetramethyl-4-piperidyl)-hexamethylendiamin und 4-tert.Octylamino-2,6-dichlor-1,3,5-s-triazin, Tris-(2,2,6,6-tetramethyl-4-piperidyl)-nitrotriacetat, Tetrakis-(2,2,6,6-tetramethyl-4-piperidyl)-1,2,3,4-butantetracarbonsäure, 1,1'-(1,2-Ethandiyl)-bis-(3,3,5,5-tetramethylpiperazinon).

2.7 Oxalsäurediamide, wie z.B. 4,4'-Di-octyloxy-oxanilid, 2,2'-Di-octyloxy-5,5'-di-tert.butyl-oxanilid, 2,2'-Di-dodecyloxy-5,5'-di-tert.butyl-oxanilid, 2-Ethoxy-2'-ethyl-oxanilid, N,N'-Bis-(3-dimethylaminopropyl)-oxalamid, 2-Ethoxy-5-tert.butyl-2'-ethyloxanilid und dessen Gemisch mit 2-Ethoxy-2'-ethyl-5,4'-di-tert.butyl-oxanilid Gemische von o-und p-Methoxy- sowie von o- und p-Ethoxy-disubstituierten Oxaniliden.

3. Metalldesaktivatoren, wie z.B. N,N'-Diphenyloxalsäurediamid, N-Salicylal-N'-salicyloylhydrazin, N,N'-Bis-salicyloylhydrazin, N,N'-Bis-(3,5-di-tert.butyl-4-hydroxyphenylpropionyl)-hydrazin, 3-Salicyloylamino-1,2,4-triazol, Bis-benzylidenoxalsäuredihydrazid.

4. Phosphite und Phosphonite, wie z.B. Triphenylphosphit, Diphenylalkylphosphite, Phenyldialkylphosphite, Tri-(nonylphenyl)-phosphit, Trilaurylphosphit, Trioctadecylphosphit, Distearyl-pentaerythritdiphosphit, Tris-(2,4-di-tert.butylphenyl)-phosphit, Diisodecylpentaerythrit-diphosphit, Di-(2,4-di-tert.butylphenyl)-pentaerythritdiphosphit, Tristearyl-sorbit-triphosphit, Tetrakis-(2,4-di-tert.butylphenyl)-4,4'-biphenylen-diphosphonit, 3,9-Bis-(2,4-di-tert.butylphenoxy-2,4,8,10-tetra-oxa-3,9-diphosphaspiro[5,5]undecan.

5. Peroxidzerstörende Verbindungen, wie z.B. Ester der β-Thiodipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis-(β-dodecylmercapto)-propionat.

6. Polyamidstabilisatoren, wie z.B. Kupfersalze in Kombination mit Jodiden und/oder Phosphorverbindungen und Salze des zweiwertigen Mangans.

7. Basische Co-Stabilisatoren, wie z.B. Melamin, Polyvinylpyrrolidon, Dicyandiamid, Triallylcyanurat, Harnstoff-Derivate, Amine, Polyamide, Polyurethane, Alkali- und Erdalkalisalze höherer Fettsäuren, beispielsweise Ca-Stearat, Zn-Stearat, Mg-Stearat, Na-Ricinoleat, K-Palmitat, Antimonbrenzcatechinat oder Zinnbrenzcatechinat.

8. Nukleierungsmittel, wie z.B. 4-tert.Butylbenzoesäure, Adipinsäure, Diphenylessigsäure.

9. Füllstoffe und Verstärkungsmittel, wie z.B. Calciumcarbonat, Silikate, Glasfasern, Asbest, Talk, Kaolin, Glimmer, Bariumsulfat, Metalloxide und - hydroxide, Russ, Graphit.

10. Sonstige Zusätze, wie z.B. Weichmacher, Gleitmittel, Emulgatoren, Pigmente, Optische Aufheller, Flammschutzmittel, Antistatika, Treibmittel.

Die erfindungsgemäßen Formkörper werden durch Vermischen der Einzelkomponenten erhalten. Das Vermischen kann nach bekannten Techniken in jeglicher Weise erfolgen, z.B. über Kneter oder Schneckenmaschinen. Die Weiterverarbeitung erfolgt durch die bekannten Techniken der Thermoplastverarbeitung, z.B. durch Extrusion oder Spritzguß.

Formkörper gemäß vorliegender Erfindung sind Halsbänder, Halsbandanhänger (Medaillons), Ohr-, Schwanz-, Fußbänder, Ohrmarken, Folien, Abziehfolien, Klebestreifen, Streifen, Platten, Granulate. Bevorzugt genannt seien Halsbänder und Medaillons für Hunde und Katzen.

Die Formkörper dienen zur Bekämpfung von Parasiten auf dem Wirtstier, am Wirtstier und in der Umgebung von Wirtstieren wie Haus-, Hobby- und Nutztieren.

Zu den Haus-, Hobby- und Nutztieren gehören Säugetiere wie z.B. Rinder, Schafe, Ziegen, Pferde, Schweine, Hunde, Katzen.

Zu den Schädlingen gehören:

Aus der Ordnung der Anoplura z.B. Haematopinus spp., Linognathus spp., Solenopotes spp., Pediculus spp., Pthirus Spp.;

aus der Ordnung der Mallophaga z.B. Trimenopon spp., Menopon spp., Eomenacanthus spp., Menacanthus spp., Trichodectes spp., Felicola spp., Damalinea spp., Bovicola spp;

aus der Ordnung der Diptera z.B. Aedes spp., Culex spp., Simulium spp., Phlebotomus spp., Chrysops spp., Tabanus spp., Musca spp., Hydrotaea spp., Muscina spp., Haematobosca spp., Haematobia spp., Stomoxys spp., Fannia spp., Glossina spp., Lucilia spp., Calliphora spp., Auchmeromyia spp., Cordylobia spp., Cochliomyia spp., Chrysomyia spp., Sarcophaga spp., Wohlfartia spp., Gasterophilus spp., Oesteromyia spp., Oedemagena spp., Hypoderma spp., Oestrus spp., Rhinoestrus spp., Melophagus spp., Hippobosca spp..

Aus der Ordnung der Siphonaptera z.B. Ctenocephalides spp., Echidnophaga spp., Ceratophyllus spp..

Aus der Ordnung der Metastigmata z.B. Hyalomma spp., Rhipicephalus spp., Boophilus spp., Amblyomma spp., Haemaphysalis spp., Dermacentor spp., Ixodes spp., Argas spp., Ornithodorus spp., Otobius spp.;

aus der Ordnung der Mesostigmata z.B. Dermanyssus spp., Ornithonyssus spp., Pneumonyssus spp..

Aus der Ordnung der Prostigmata z.B. Cheyletiella spp., Psorergates spp., Myobia spp., Demodex spp., Neotrombicula spp.;
aus der Ordnung der Astigmata z.B. Acarus spp., Myocoptes spp., Psoroptes spp., Chorioptes spp., Otodectes spp., Sarcoptes spp., Notoedres spp., Knemidocoptes spp., Neoknemidocoptes spp. Cytodites spp., Laminosioptes spp..

Die folgenden Beispiele für insektizide Formteile auf der Basis Copolyether-Blockamiden sollen die Erfindung illustrieren:

Beispiel A

| | | |
|---|---|---|
| Zusammensetzung: | β-Cyfluthrin | 10,00 g |
| | Pyriproxifen | 0,35 g |
| | Triacetin | 5,00 g |
| | Polyether-Blockamid (Pebax®) | 84,65 g |
| | | 100,00 g |

Herstellung:

Die Wirkstoffe und Triacetin werden zusammen solange erhitzt, bis sich eine klare Lösung ergibt. Pebax wird in einem Mischer mit der warmen Lösung aus Wirkstoffen und Triacetin benetzt. Man mischt solange, bis die Mischung homogen ist. Dabei fördert Erwärmung der Mischung, z.B. infolge einer Erhöhung der Tourenzahl des Mischers, das Einziehen der Lösung in das Polyether-Blockamid. Die Mischung wird auf einem Extruder zu Platten extrudiert, aus denen Medaillons (= Anhänger für Halsbänder) zu 2 x 4 cm ausgestanzt werden.

Beispiel B

| | | |
|---|---|---|
| Zusammensetzung: | Propoxur | 7,50 g |
| | Polyether-Blockamid (Pebax®) | 92,50 g |
| | | 100,00 g |

Herstellung:

Der Wirkstoff wird in einem Intensivmischer auf den Träger aufgebracht und die Mischung in Spritzgruß zu Hundehalsbändern geformt.

Beispiel C

| | | |
|---|---|---|
| Zusammensetzung: | β-Cyfluthrin | 12,00 g |
| | Polyether-Blockamid (Vestamid®) | 88,00 g |
| | | 100,00 g |

Herstellung:

Die Mischung wird in herkömmlicher Weise zu Hundehalsbändern extrudiert.

## Patentansprüche

1. Wirkstoffhaltige Formkörper, dadurch gekennzeichnet, daß sie als Träger thermoplastische Elastomere auf Basis von Polyether-Blockamiden und mindestens einen Wirkstoff aus der Reihe Propoxur, Cyfluthrin, Flumethrin oder Pyriproxifen gegebenenfalls neben üblichen Zusätzen enthalten.

2. Verfahren zur Herstellung wirkstoffhaltiger Formkörper, dadurch gekennzeichnet, daß man thermoplastische Elastomere auf Basis von Polyether-Blockamiden mit mindestens einem Wirkstoff aus der Reihe Propoxur, Cyfluthrin, Flumethrin oder Pyriproxifen und gegebenenfalls üblichen Zusätzen mischt und in üblicher Weise verarbeitet.

3. Wirkstoffhaltige Formkörper gemäß Anspruch 1 in der Form von Halsbändern für Tiere.

4. Wirkstoffhaltige Formkörper gemäß Anspruch 1 in der Form von Medaillons (Anhängern) für Tiere.

5. Verwendung wirkstoffhaltiger Formkörper gemäß Anspruch 1 zur Bekämpfung von Parasiten an Tieren.

## Claims

1. Shaped articles which contain active compounds, characterised in that they comprise, as the carrier, thermoplastic elastomers based on polyether block amides and at least one active compound from the series consisting of propoxur, cyfluthrin, flumethrin or pyriproxyfen, if appropriate in addition to customary additives.

2. Process for the production of shaped articles containing active compounds, characterised in that thermoplastic elastomers based on polyether block amides are mixed with at least one active compound from the series consisting of propoxur, cyfluthrin, flumethrin or pyriproxyfen and if appropriate customary additives and the mixture is processed in the customary manner.

3. Shaped articles which contain active compounds according to Claim 1 in the form of neck collars for animals.

4. Shaped articles which contain active compounds according to Claim 1 in the form of medallions (pendants) for animals.

5. Use of shaped articles which contain active compounds according to Claim 1 for combating parasites on animals.

## Revendications

1. Articles moulés comportant une substance active, caractérisés en ce qu'ils contiennent des élastomères thermoplastiques à base de polyéther-blocamides comme supports, et au moins une substance active de la série Propoxur, Cyfluthrine, Fluméthrine ou Pyriproxifène, le cas échéant à côté d'additifs classiques.

2. Procédé de production d'articles moulés contenant une substance active, caractérisé en ce qu'on mélange des élastomères thermoplastiques à base de polyétherblocamides avec au moins une substance active de la série Propoxur, Cyfluthrine, Fluméthrine ou Pyriproxifène et, le cas échéant, avec des additifs classiques et on met en oeuvre le mélange d'une manière classique.

3. Articles moulés contenant une substance active suivant la revendication 1, sous forme de colliers pour animaux.

4. Articles moulés contenant une substance active suivant la revendication 1, sous forme de médaillons (attaches) pour animaux.

5. Utilisation d'articles moulés contenant une substance active suivant la revendication 1 pour combattre des parasites sur des animaux.